# EUROPEAN PATENT APPLICATION

(11) **EP 4 398 156 A1**
(43) Date of publication of application: **10.07.2024**
(21) Application number: 23218070.3
(22) Date of filing: 19.12.2023
(51) Int. Cl.: G06N 3/0455, G06N 3/09, G06N 3/096, G06N 20/00, G06N 5/045, G06F 40/30

(54) **ARTIFICIAL INTELLIGENCE EXPLAINABILITY FOR INTENT CLASSIFICATION**

(30) Priority: 05.01.2023 US 202318150671
(71) Applicant: Accenture Global Solutions Limited, Dublin 4 (IE)
(72) Inventor: DE, Tanusree, 560017 Karnataka (IN); MUKHERJEE, Debapriya, 700091 West Bengal (IN); UPADHYAYULA, Raghavender Surya, 560087 Karnataka (IN); KOTALA, Raghavendra, 560068 Karnataka (IN)
(74) Representative: Boult Wade Tennant LLP

(57) **Abstract**

Systems and methods for providing an explainability framework for use with AI systems are described. In one example, such an AI explainability system for intent classification uses a surrogate Bert-Siamese model approach. For example, a prediction from an intent classification model is paired with a top matching sentence and used as input to train a Bert-Siamese model for sentence similarity. Using the sentence similarity, the token / word level embedding can be extracted from attention weights of the sentences and correlations between query tokens/words, and the best matching sentences may be used for explanations.

## Description

### TECHNICAL FIELD

The present disclosure generally relates to the field of explainability in artificial intelligence (Al) decision-making. More specifically, the present disclosure generally relates to an explanation framework that can implement a context aware intent classification model based on transformer architecture.

### BACKGROUND

Artificial intelligence, also referred to as AI, uses machine learning techniques at its core to allow machines to emulate certain core aspects of human behavior. In other words, AI allows machines to behave as autonomous systems that are capable of perceiving, learning, taking a decision, and taking an action with little or no human intervention.

Modern virtual agents have gained popularity across all industries for the ease of setting up connection with customers, understanding their requirements and offering a personalized service. The most essential tool behind this Natural Language Understanding (NLU) is based on intent classification. Intent classification is the task of categorizing text data based on user's intention or goals. These Natural Language Processing (NLP) focused classification models are mostly based on supervised learning, in which the classifiers are trained on rule-based pattern-matching using structured datasets. There are also deep learning-based models developed for specific NLU tasks used as chatbots. These language models, frequently relied upon by AI systems, are broadly divided into context-aware and context-free. However, many of these models are incomprehensible to humans.

In general, the effectiveness of a responsible Al-based system, particularly when used for augmenting human intelligence, can be measured in terms of the system's ability to explain the decisions and actions to users. While in certain cases the user might agree with a certain action or a decision or altogether forego the need for an explanation from the machine, in most cases, the user may only appreciate or even accept a recommendation given by a machine if the machine is able to explain the logical steps and reasoning used to arrive at that recommendation.

However, conventional systems offer little or no visibility on how AI systems make the decisions, or what are the reasons for their predictions. Due to this lack of transparency, explainability plays a pivotal role in building trust in the solution and in guiding downstream actions in business applications. The challenge is to deliver the intention of a message, and to make machines understand not only the words, but also the underlying concepts related to the delivered message. While there exist various intent classification models based on both machine learning and deep learning concepts, these manifest as a black box to the customers using them. To resolve a technical problem there arises a need for a conversational interface that would explain the rationale behind the classification process and improve the performance of natural language understanding (NLU) models. It is desirable to provide end-users with a mechanism by which each decision made by an AI system (Explainable Al, or "XAI") is transparent and the basis of the decision is understandable by human agents, such that the AI system can be diagnosed if an issue arises that indicates the AI system is making inaccurate predictions or decisions.

There is a need in the art for a system and method that addresses the shortcomings discussed above.

### BRIEF DESCRIPTION OF THE DRAWINGS

The invention can be better understood with reference to the following drawings and description. The components in the figures are not necessarily to scale, emphasis instead being placed upon illustrating the principles of the invention. Moreover, in the figures, like reference numerals designate corresponding parts throughout the different views.
FIG. 1 is a schematic diagram of a high-level overview of an explanation framework, according to an embodiment;
FIG. 2 is a schematic diagram of process by which explainability is generated for an intent prediction, according to an embodiment;
FIG. 3 is a flow diagram showing the processing of two sentences for purposes of determining sentence similarity, according to an embodiment;
FIG. 4A is an example of a global explanation representation and FIG. 4B is an example of a local explanation representation, according to an embodiment;
FIG. 5A is an example of a local explanation heatmap for a correct intent prediction and FIG. 5B is an example of a local explanation heatmap for the correct prediction explanation, according to an embodiment;
FIG. 6A is an example of a local explanation heatmap for an incorrect intent prediction and FIG. 6B is an example of a local explanation heatmap for the incorrect prediction explanation, according to an embodiment;
FIG. 7 is a diagram depicting example environments and components by which systems and/or methods, described herein, may be implemented; and
FIG. 8 is a flow chart depicting a method for providing reasoning for an intent prediction made by an artificial intelligence (Al)-based intent classifier, according to an embodiment.

### SUMMARY

Implementations described herein provide for augmentation of AI systems with explainability components. Explainable artificial intelligence (Al) can be programmed to describe a purpose, a rationale, and/or a decision-making process of the AI in a way that can be understood by a human. Explainable AI is in contrast to "black-box" Al, which is opaque, even to designers of the Al, as to why the AI arrived at a specific decision.

The proposed embodiments describe an explanation framework that offers increased clarity as to how an AI model such as Bidirectional Encoder Representations from Transformers (BERT) interprets words in a given sentence or query, and how the sentence has been matched. In cases where the model's prediction is incorrect, the explanation framework can facilitate understanding of what went wrong or how the intent was identified. For example, in some embodiments, the system generates heatmaps that visually explain the prediction. A tester can review the heatmap and quickly understand where the problem lies and then make corrections accordingly, for example by adjusting the training corpus to include proper sentences to train the model. By identifying the root cause of a wrongly selected intent, developers and the test operators (collectively referred to herein as reviewers) can recognize the responsible words and make modifications that ensure the system selects the right sentences. The system then becomes more robust and capable of accurate processing free-flowing text. In one exemplary embodiment, the disclosed system and method for providing reasoning for an intent prediction made by an artificial intelligence (Al)-based intent classifier can be incorporated into a system and method for a virtual agent having a dialog manager that generates responses for the virtual agent to present to a user. In such an embodiment, the system and method can include finding the root cause of a wrongly selected intent and making modifications, in the manner discussed above. For example, the system can generate heatmaps that visually explain the intent prediction and that can be used to find the root cause of a wrongly selected intent. With knowledge of the root cause, modification(s) can be made to improve the intent prediction. The modification(s) can further improve the intent prediction, and in turn, improve the virtual agent's responses generated by the dialog manager.

In some embodiments, the disclosed system and method for providing reasoning for an intent prediction made by an artificial intelligence (Al)-based intent classifier can include extracting word embeddings from input sentences. Word embeddings are the representation of words in a numeric format, which can be understood by a computer. For example, word embeddings may include vectors.

In one aspect, the disclosure provides a computer-implemented method for providing reasoning for an intent prediction made by an artificial intelligence (Al)-based intent classifier. The method includes a first step of receiving, at an intent classifier, a first query, and a second step of selecting, from a training corpus and by the intent classifier, a first sentence that is labeled with a first intent. A third step includes extracting, at the intent classifier, first word embeddings for the first sentence and second word embeddings for the first query, and a fourth step includes determining, at the intent classifier, the first query is sufficiently similar to the first sentence to associate the first query with the first intent. A fifth step includes passing, from the intent classifier, the extracted first word embeddings and second word embeddings to a prediction explanation model, and a sixth step includes generating, at the prediction explanation model, similarity scores for all possible pairings of word embeddings between the first word embeddings and the second word embeddings. The method further includes a seventh step of presenting, via the prediction explanation model, a first visual representation of the similarity scores.

In another aspect, the disclosure provides a non-transitory computer-readable medium storing software comprising instructions executable by one or more computers which, upon such execution, cause the one or more computers to: (1) receive, at an intent classifier, a first query; (2) select, from a training corpus and by the intent classifier, a first sentence that is labeled with a first intent; (3) extract, at the intent classifier, first word embeddings for the first sentence and second word embeddings for the first query; (4) determine, at the intent classifier, the first query is sufficiently similar to the first sentence to associate the first query with the first intent; (5) pass, from the intent classifier, the extracted first word embeddings and second word embeddings to a prediction explanation model; (6) generate, at the prediction explanation model, similarity scores for all possible pairings of word embeddings between the first word embeddings and the second word embeddings; and (7) present, via the prediction explanation model, a first visual representation of the similarity scores.

In another aspect, the disclosure provides a system for providing reasoning for decisions made by an artificial intelligence (Al) system. The system comprises one or more computers and one or more storage devices storing instructions that are operable, when executed by the one or more computers, to cause the one or more computers to: (1) receive, at an intent classifier, a first query; (2) select, from a training corpus and by the intent classifier, a first sentence that is labeled with a first intent; (3) extract, at the intent classifier, first word embeddings for the first sentence and second word embeddings for the first query; (4) determine, at the intent classifier, the first query is sufficiently similar to the first sentence to associate the first query with the first intent; (5) pass, from the intent classifier, the extracted first word embeddings and second word embeddings to a prediction explanation model; (6) generate, at the prediction explanation model, similarity scores for all possible pairings of word embeddings between the first word embeddings and the second word embeddings; and (7) present, via the prediction explanation model, a first visual representation of the similarity scores.

In some embodiments, similarity scores can be based on similarity values calculated between each pairing of word embeddings with respect to one or more of their shared semantic, syntactic, and contextual morphologies. The relevance or importance of a word in a sentence can be better understood by examining the word's syntactic and semantic relation among other words within the sentence and the context it carries to determine the meaning of the entire sentence. Capturing these three morphological aspects provides an AI model with robustness in comparison with a rule-based approach (e.g., only considering matching parts of speech.) The word's semantic relation among other words within the sentence is the semantic morphology. The word's syntactic relation among other words within the sentence is the syntactic morphology. The word's context it carries within the sentence is the contextual morphology.

Other systems, methods, features, and advantages of the disclosure will be, or will become, apparent to one of ordinary skill in the art upon examination of the following figures and detailed description. It is intended that all such additional systems, methods, features, and advantages be included within this description and this summary, be within the scope of the disclosure, and be protected by the following claims.

While various embodiments are described, the description is intended to be exemplary, rather than limiting, and it will be apparent to those of ordinary skill in the art that many more embodiments and implementations are possible that are within the scope of the embodiments. Although many possible combinations of features are shown in the accompanying figures and discussed in this detailed description, many other combinations of the disclosed features are possible. Any feature or element of any embodiment may be used in combination with or substituted for any other feature or element in any other embodiment unless specifically restricted.

This disclosure includes and contemplates combinations with features and elements known to the average artisan in the art. The embodiments, features, and elements that have been disclosed may also be combined with any conventional features or elements to form a distinct invention as defined by the claims. Any feature or element of any embodiment may also be combined with features or elements from other inventions to form another distinct invention as defined by the claims. Therefore, it will be understood that any of the features shown and/or discussed in the present disclosure may be implemented singularly or in any suitable combination. Accordingly, the embodiments are not to be restricted except in light of the attached claims and their equivalents. Also, various modifications and changes may be made within the scope of the attached claims.

### DESCRIPTION OF EMBODIMENTS

As noted above, conventional "black-box" AI systems (e.g., an artificial neural network) generate decisions (e.g., a prediction, a recommendation, and/or the like) using complex, multi-dimensional methods that typically cannot be interpreted by a human. Accordingly, a decision provided by a black-box AI system usually does not allow for ready examination by a human to determine reasons why the black-box AI system reached the decision. The proposed embodiments provide an explainability framework for AI by which interpretation of the model's outputs is supported, and system improvement or reinforcement more readily made by reviewers as they can understand the reasoning behind the Al's decisions.

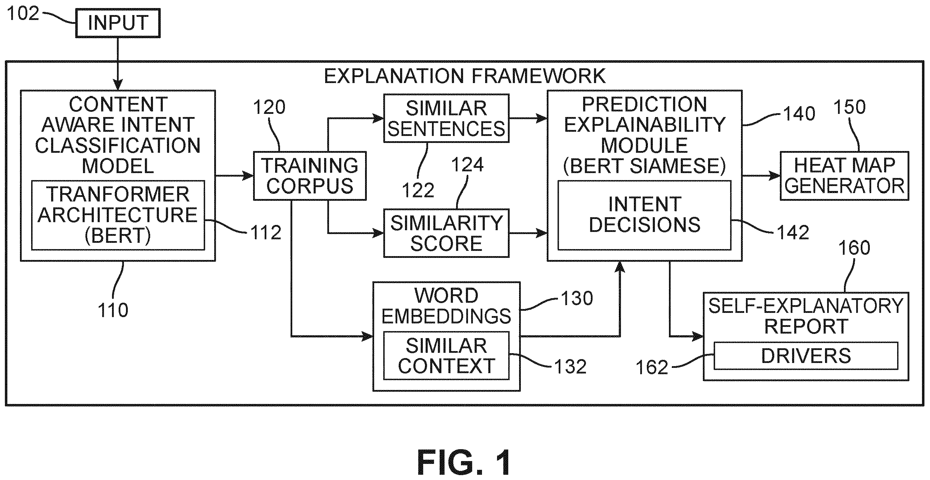

Referring to FIG. 1, an overview of the proposed embodiments is depicted. As shown in FIG. 1, an explanation framework 100 can implement a context aware intent classification model 110 based on transformer architecture 112, such as the BERT. The context aware intent classification model 110 is configured to determine a precise prediction of a particular intent, given an input sentence. In one example, the proposed methodology is configured to predict intent decisions 142 by an AI by extracting similar sentence(s) 122 from a training corpus 120, along with a similarity score 124.

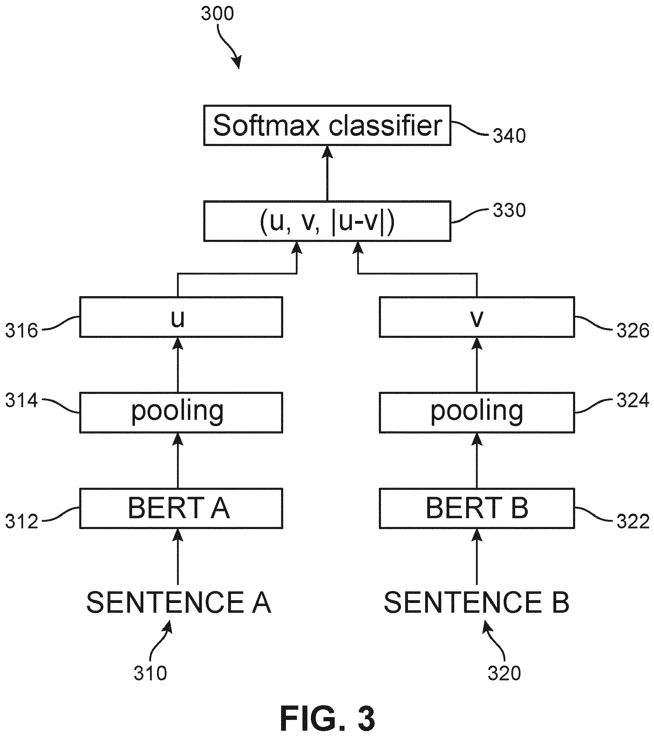

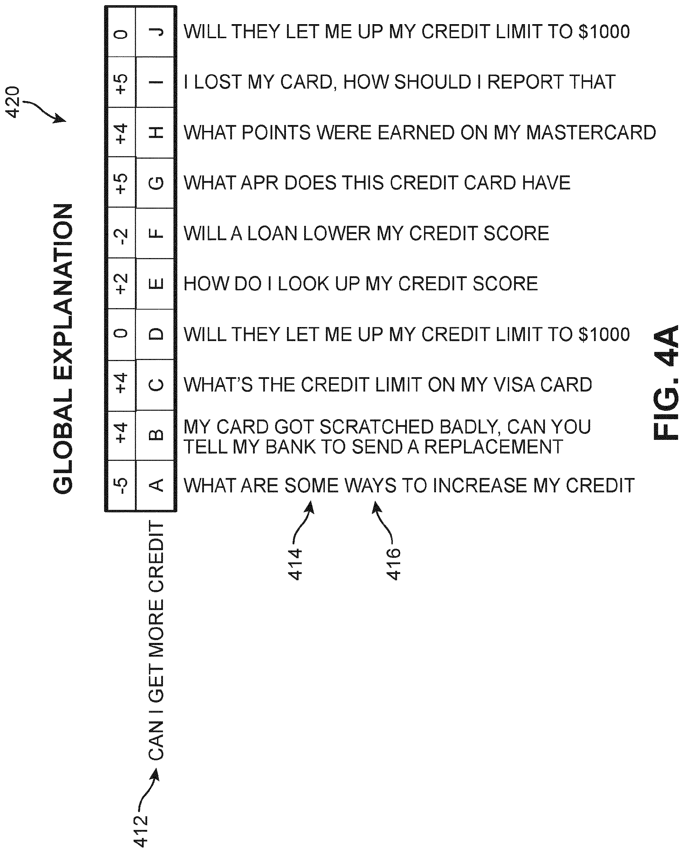

In some embodiments, further drilling to a word embeddings level 130 can be used to capture phrases with similar context 132 (e.g., see FIG. 3). This methodology for explainable AI (XAI) can then be used to generate a visually explainable heat map 150 (further examples shown in FIGS. 4A-6B), whose x-axis represents a query sentence (tokens), and y-axis represents the best match from the training corpus 120. In some embodiments, the heatmap coloring gradient may be based on a similarity of word vectors derived from the attention layer of the transformer model for the respective pairwise tokens on x-axis (query) and y-axis (corpus).

In some embodiments, the explanation framework 100 can be used to explain the process of classifying a given statement, query, sentiment, or other utterance ("input") 102 to a particular intent from the perspective of capturing the usage of the words from the context of the sentence. In one example, such inputs can be domain-agnostic. As one non-limiting example, input 102 may refer to a user input as submitted to a chatbot or other Al-supported application. The explanation framework 100 is highly intuitive in that natural language statements are supported with a high degree of accuracy. In one embodiment, the explanation framework 100 incorporates a sentence similarity score methodology. In some embodiments, the explanation framework 100 also generates a self-explanatory report 160 that can identify one or more key drivers 162 of the AI model's intent classification for the benefit of reviewers.

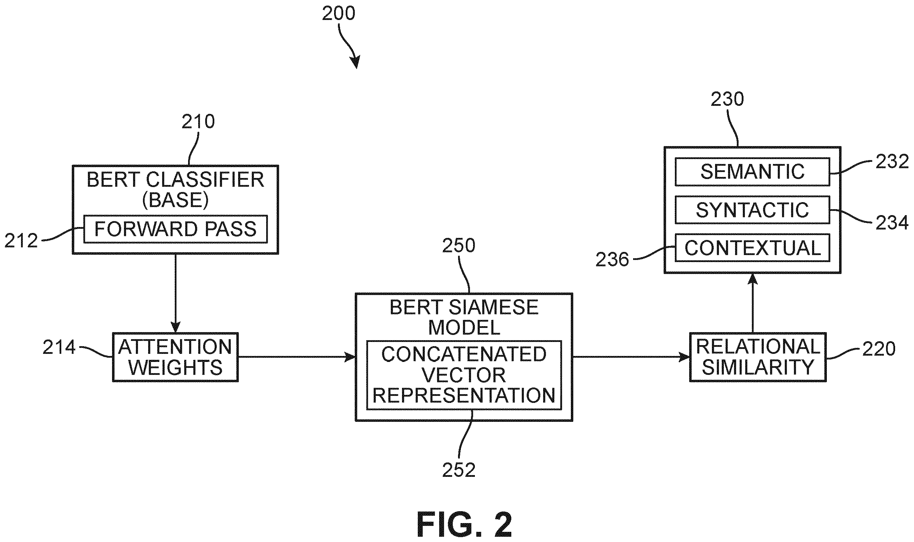

For example, in some embodiments, two similar sentences that best match the input query are selected from the BERT base model for use in a BERT Siamese model (e.g., see FIG. 2). For example, the BERT base model predicts the similar sentences of query sentences (inputs) using nearest neighbors' task and cosine similarity. Paired sentences can then be formed using the query and the top three similar sentences are selected. These sentences can then be passed to the Siamese Bert trained model.

In one embodiment, the explainability model concentrates on local explainability (explain drivers of a prediction for a single individual/datapoint). The explanation technique can thereby provide a more holistic understanding of the inner workings of the model and reasoning used by the model. In one example, this can serve as a post-hoc explanation technique that is implemented by training a Bert-Siamese model to provide both local and global explanations, as described below.

The fidelity of the explanation methodology has been established on building block of virtual agent services (chatbots) on banking industry. However, in other embodiments, the proposed XAI methodology can be applicable and implemented for any black-box transformer-based Intent Classification models. In different embodiments, such an explanation framework can be used across systems for various industries. For example, the XAI framework has also been tested in a financial domain use-case. Furthermore, embodiments of the explainability framework can be readily extended to retail, healthcare, and other allied domains of natural language processing (NLP). For example, if an AI model recommends that the user should undergo an invasive medical treatment, the user may want visibility into the reasoning and 'intellect' used for the recommendation, which can be provided by the proposed explainability framework. As another alternate example, in healthcare, explanations for denied claims are mandated as part of the explanation of benefits. As another example related to finance or accounting scenarios, explanations and reasoning are necessary for recommendations for the chart of account code for a journal entry, which can also be provided by the proposed XAI systems. In another example, in procurement, reasoning and explanations are necessary, for example, to explain the selection of vendors or the final bid, and as yet another example, in policy-based content moderation, explanations and reasoning are required for rejected out-of-policy advertisements or social media postings, both of which can be served by the explainability framework.

In another example, a conventional "black-box" AI system associated with an autonomous vehicle may determine a course of action that causes the autonomous vehicle to crash. However, the black-box AI system of the autonomous vehicle is not capable of explaining a reasoning that led to the determined course of action causing the crash. Accordingly, the person responsible for reviewing the crash details may consume considerable computing resources (e.g., processor resources, memory resources, and/or the like) and time attempting to identify a reasoning of the black-box AI system, troubleshoot the black-box AI system and/or the autonomous vehicle, adjust parameters of the black-box AI system, and/or the like. Such scenarios highlight a technical problem of conventional black-box AI systems in that they may be inefficient in providing an analysis of the solution that they offer. As such, the existing systems may utilize computational and manual resources, which may still lead to an insufficient and an ineffective result.

Thus, it should be appreciated that the explainability performance of AI models, provided by the proposed systems, represents a significant aspect of responsible Al, as it serves to provide reasoning and backing to the decisions made by the AI models in a human-readable way. Furthermore, a decision outputted by a black-box AI system may represent a less trustworthy response due to its lack of transparency. For example, a user interacting with a black-box AI system that provides recommendations (e.g., hotel recommendations, movie recommendations, and/or the like) may attempt to steer the black-box AI system toward recommendations thought by the user to be more reliable. Accordingly, the user may make numerous queries to the black-box AI system with various combinations of keywords, filters, sorting techniques, and/or the like until a recommendation found suitable by the user is presented. This wastes computing resources (e.g., processor resources, memory resources, and/or the like) and/or network resources that would otherwise be conserved if the user were to trust the recommendations of the black-box AI system or if the user were able to interact directly with a reasoning for the recommendations. Techniques for XAI, or AI which is capable of offering an explanation for the decisions made by it, is therefore a desirable and necessary aspect of Al-model decision-making. The proposed XAI systems can accommodate these needs and provide explanations that can foster trust by users and facilitate improvements in AI performance.

FIG. 2 depicts a process 200 of an embodiment of a high-level process by which the proposed explanation techniques can be implemented. As shown in FIG. 2, in different embodiments, the proposed system can present a justification (explanation) of an AI model's prediction by extracting the attention weights 214 of the sentences from a forward pass 212 of a regular BERT (base) classifier 210. For example, in some embodiments, the regular BERT classifier may perform the operations described in Jacob Devlin, Ming-Wei Chang, Kenton Lee, Kristina Toutanova, "BERT: Pre-training of Deep Bidirectional Transformers for Language Understanding" (October 11, 2018), available at arXiv:1810.04805 or https://doi.org/10.48550/arXiv.1810.04805, hereby incorporated by reference in its entirety. The extraction of attention weights allows the system to compare contexts for the query. The system can then establish a relational similarity 220 of paired sentences on one or more of three morphological aspects of a word including semantic 232, syntactic 234, and contextual 236.

In different embodiments, these three specific morphological aspects are selected to enable understanding by the system of the relevance or importance of a word in a sentence -- a word's syntactic and semantic relation among other words within the sentence and the context it carries can be used to determine the meaning of the entire sentence. In one example, capturing these three morphological aspects thus enhances the robustness of the model, without which the system might rely on a less-effective rule-based approach (where parts of speech matching would instead be performed). The three aspects can together be used to identify an essence of the meaning of a sentence. For example, in other word embedding techniques, there may be some syntactic similarity without the contextual or semantic aspects, so the output would be based on inferior embeddings.

More specifically, in one example, a BERT Siamese model 250 is used to understand semantic similarity. For example, in some embodiments, the BERT Siamese model may perform the operations described in Nils Reimers and Iryna Gurevych, "Sentence-BERT: Sentence Embeddings using Siamese BERT-Networks" (August 27, 2019), available at arXiv:1908.10084 or https://doi.org/10.48550/arXiv.1908.10084, hereby incorporated by reference in its entirety. In some embodiments, the BERT Siamese model 250 can concatenate the vector representation of two similar sentences (these sentences are selected from a BERT base model) that were selected from the regular BERT classifier 210 and their corresponding attention weights. In one embodiment, the BERT Siamese model 250 is selected because it can produce a concatenated vector representation 252 that nullifies the incomprehensible impact of out-of-vocabulary words and reduces the matching time of encoded text. Using Siamese architecture, the system can share the weights of similar sentences and bring the correlation of their respective word embeddings from the attention weights from BERT layer. This process allows the system to determine how the words in each of the two sentences (pairs) are related to one another. In one example, if two similar sentences are determined to have the same intent, the system can then identify which words, specifically, are responsible for such a determination, or which words bring the context for the first sentence and the context for the second sentence closer together. In other words, while the regular BERT model is used to determine an intent for the input, the Siamese BERT model is used to determine an explanation for the intent that was selected by the regular BERT model by reviewing the word embeddings and identifying a commonality between the inputted sentence and a sentence in the training corpus.

It should be noted that the pairing of the sentences with similar intents was shown to provide more accurate results, based on a scoring mechanism where a ranking of the top matching sentences of the same sentence. The original query (input) is fixed, and individually paired with the top three scored sentences from the corpus, providing three pairwise combinations. In one embodiment, only these three combinations ("pairs") will be passed through the system for further comparison. While additional pairs may be generated by adding more top-scoring sentences, experimental data indicated that the system performs better (i.e., yields more accurate results) when restricted to only the three top sentence pairings. For example, increasing the number to four or five sentences led to greater variance, and above five sentences led to non-relevant results.

FIG. 3 depicts a diagram 300 of a high-level process for passing embeddings from one architecture to another. In this example, Sentence A 310 refers to the user utterance/input sentence that was entered into base BERT architecture ("regular BERT"), and Sentence B 320 is the sentence selected from the BERT dataset that regular BERT determined was closest to Sentence B 320. Since embeddings for Sentence A 310 and Sentence B 320 were already generated for regular BERT, these same embeddings can be used for the Siamese BERT, which can significantly reduce the drain on time and computing resources. Indeed, in some embodiments, the corpus for regular BERT can be similar to the corpus for Siamese BERT, with only slight differences.

For purposes of illustration, in FIG. 3, each BERT model (identified here for reference as "BERT A" 312 and "BERT B" 322) includes a Sentence-BERT (SBERT) model, which is a modification of the pretrained BERT network. This modified network uses Siamese and triplet network structures to derive semantically meaningful sentence embeddings that can be compared using cosine-similarity. The embedding vector of the corpus used in BERT and Siamese BERT is similar. In some embodiments, SBERT architecture have tied weights (Siamese Network Structure). Because embeddings were already generated for Sentence A and Sentence B when running regular BERT, the same embeddings (training data) can be used in BERT Siamese. This eliminates a redundant step of creating embeddings again for the BERT Siamese process. This elimination can significantly improve the efficiency of the process given the fact that the models must be trained on massive datasets, and there is a heavy amount of compute time involved with training. By re-using embeddings for a particular data set, additional compute time can be avoided.

In addition, in some embodiments, two different formats of the same dataset can be used to train the BERT base and BERT Siamese models. For example, in this case, the BERT base dataset was trained on sentences with corresponding intent names, while the Siamese BERT is trained on the same dataset using paired intent and sentence from the corpus.

Thus, in some embodiments, in what can be sequential or parallel processes in different embodiments, each sentence of the two sentences comprising a sentence pair will be passed through an SBERT model. One sentence of the pair is the user query, and the other sentence is the sentence that is being compared to the query. In a first sub-process (i.e., the left-hand side of the diagram) Sentence A 310 (e.g., the query) passes through BERT A 312, and the output is pooled 314 to produce a first value 316 ("u"), and in a second sub-process (i.e., the right-hand side of the diagram) Sentence B 320 passes through BERT B 322, and the output is pooled 324 to produce a second output 326 ("v"). These outputs are arranged as a function 330 (u, v, lu-vl) and fed to a SoftMax classifier 340. This process can be repeated for each sentence pairing, where each time Sentence A 310 remains fixed, while Sentence B is updated with a different similar sentence. In subsequent cycles, the first sub-process need not be repeated, as the results for "u" will remain the same. Thus, the value for "u" can be used for each of the remaining sentence pairs, which will greatly reduce the operations that must be performed.

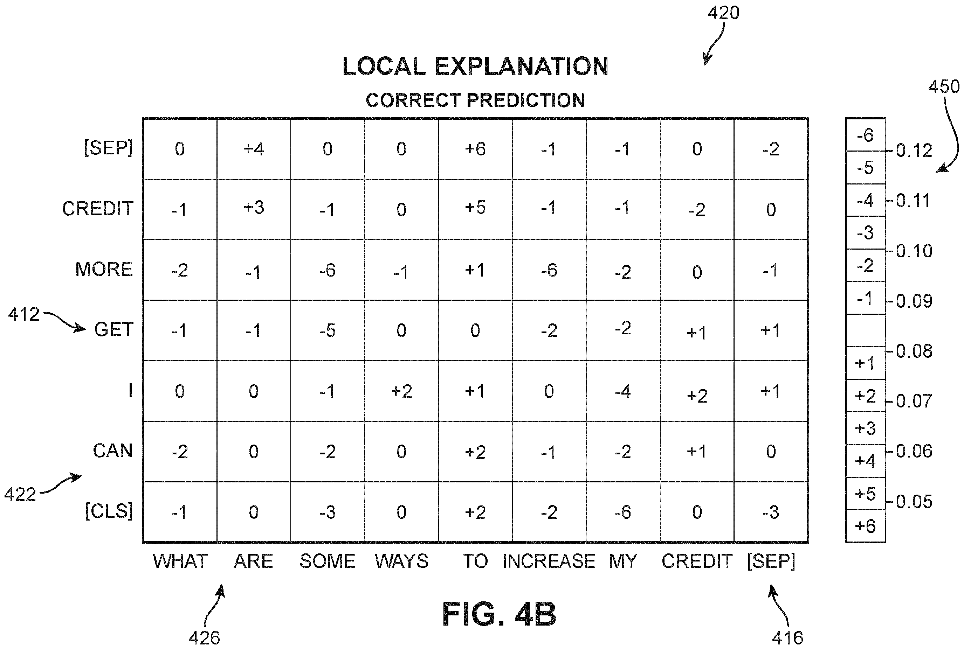

Referring now to FIGS. 4A and 4B, two visualization encodings are presented as an example of a prediction explanation that may be produced by the proposed embodiments. In FIG. 4A, a global visualization 410 is depicted, and in FIG. 4B, a local visualization 420 is depicted. As a general matter, such visualizations provide a useful graphical translation or depiction of how the system computed attention weights from the query (input), as well as the calculated key vectors. In this case, heatmaps were identified as providing the richest content in a directly visible, human-friendly format. More specifically, heatmaps can serve as graphical representations of data that utilize color-coded systems for better visualization of data and direct the reviewer towards areas of data that are most relevant or pertinent. A heatmap enables a visual identification of the responsible words/phrases behind a correct or incorrect intent identification by the model. Thus, an end-user will have a greater sense of trust in the model because they are able to understand the decision via a visual explanation of how the model predicts a given intent. FIGS. 4A and 4B indicate the strength of attention between the connected words. In this case, a heatmap is used, which assigned higher attention values colors associated with blue hues while lower values were associated with more orange hues - in other words, color intensity is used to represent magnitude. Because the drawings are in black and white, a conversion based on a range of numerical values will be shown in the place of the colored heatmap. Thus, it is to be understood that the range of numbers +6 to -6 correspond directly to a spectrum of colors. In the examples shown herein, +6 is the hottest or warmest color (i.e., red), and -6 is the coldest or coolest color (i.e., blue). Between these two extremes there is a gradient moving from red to orange to yellow to white (zero) and then to light blue to sky blue to dark blue to near-indigo. A legend representing this spectrum is included in FIGS. 4B-6B.

In FIG. 4A, an example input utterance 412 ("can I get more credit") is compared with multiple quasi-similar sentences 414 selected from the corpus. For purposes of reference, each of these sentences are associated with a letter, A through J. In this example, ten sentences are compared with the example input utterance 412. These include a first sentence 416 ("what are some ways to increase my credit" (A)), and others including (B) "my card got scratched badly, can you tell my bank to send a replacement", (C) "what's the credit limit on my visa card", (D) "will they let me up my credit limit to $1000", (E) "how do I look up my credit score", (F) "will a loan lower my credit score", (G) "what APR does this credit card have", (H) "what points were earned on my mastercard", (I) "I lost my card, how should I report that", and (J) "will they let me up my credit to $1000". To explain the global model output that is generated by the system, the trained model, knowledge of the algorithm, and the data, are used to develop an understanding of how the model makes decisions, based on a holistic view of its features and each of the learned components such as weights, other parameters, and structures. Global model interpretability facilitates an interpretability of the results, and allows a reviewer to understand the distribution of a target outcome based on the features. In FIG. 4A, it can be seen that the more similar sentences are "cooler" in color (toward +6), and include sentences A, D, F, and J. Sentences that are somewhat related are "warmer" (toward -6) and include sentences B, C, E, and H. Finally, sentences G and I are at the hottest end (very close to -6) of the spectrum, and are deemed unrelated, or considered highly dissimilar.

The local visualization 420 in FIG. 4B provides more detail regarding the attention weights for each word embedding with respect to the first sentence 416. In other words, FIG. 4B is akin to "zooming in" on a single instance (sentence) of the complete data set and examining what the model predicts for this subset of the input and explain why. Thus, each of the ten sentences in FIG. 4A can be used to create a similar type of local visualization graph that details the individual prediction, and describe the behavior of the otherwise complex AI decision-making process at the token or granular level.

In FIG. 4B, an x-axis 426 lists each word in the selected sentence, and a y-axis 422 lists each word in the query sentence. A legend 450 shows the values of the range of colors in the heatmap (shown here as the range of numbers -6 to +6). For each term in the set of words, a corresponding color indicates the degree of determined similarity or match, with the "cooler" or lighter colors being a stronger match, and the "warmer" or heavier colors being a weaker match.

Thus, as described herein, model predictions for multiple instances can be explained either with global model interpretation methods (on a modular level) or with explanations of individual instances. The global methods can be applied by taking the group of instances, treating them as if the group were the complete dataset, and using the global methods with this subset. The individual explanation methods can be used on each instance and then listed or aggregated for the entire group.

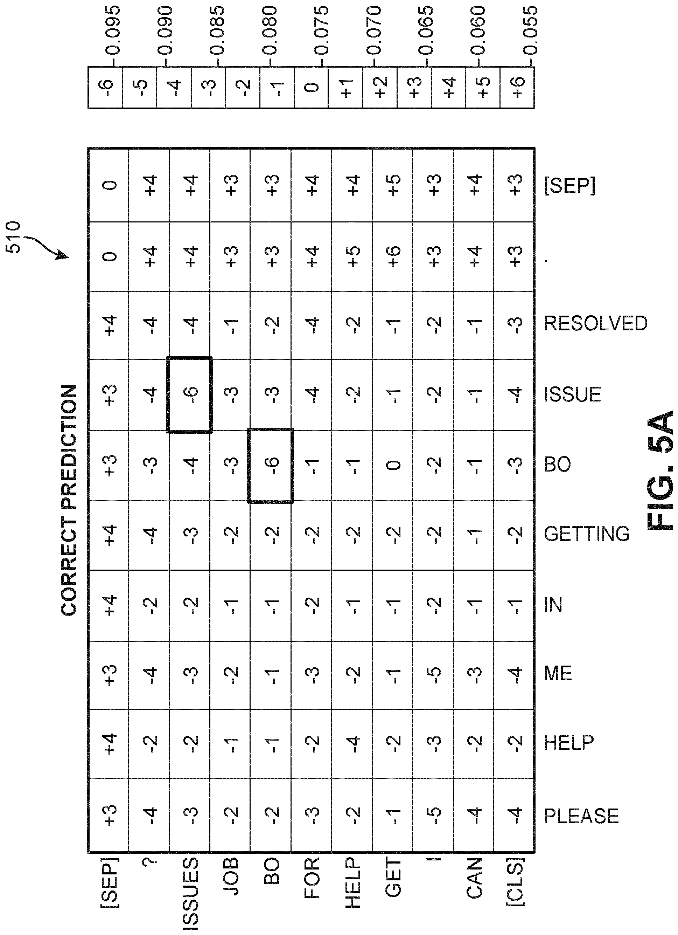

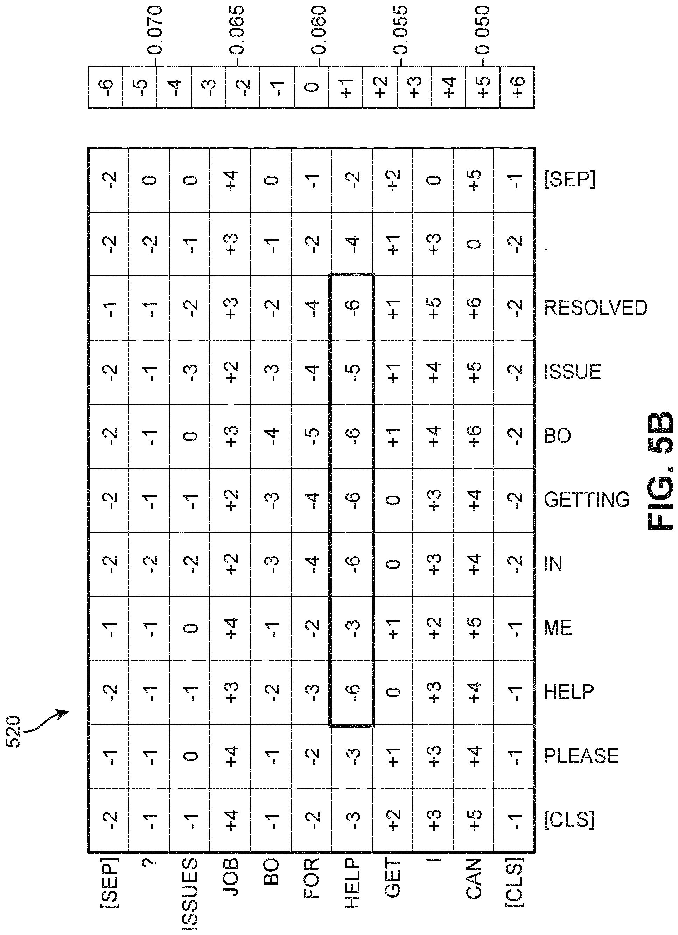

Another example of a heatmap visualization graph is shown in FIGS. 5A and 5B. In FIG. 5A, a first local heatmap 510 shows the BERT model's prediction of an intent, and in FIG. 5B a second local heatmap 520 shows the proposed embodiments' explainability of the intent that was predicted by the BERT model in FIG. 5A. In both of these heatmaps, a y-axis lists the terms of the user's query ("can", "I", "get", "help", "for", "bo", "job", "issues") as the fixed sentences in the pair of sentences. An x-axis of each heatmap lists the terms of the similar sentence that was compared with the query and selected as the intent by the BERT model ("please", "help", "me", "in", "getting", "bo", "issue", "resolved"). In this example, the query was focused on accessing help for bo-based queries (i.e., business objects and query building). The first local heatmap 510, shown here as a number value-converted color map, was generated based on the regular BERT model prediction attention weights assigned for each of the words. Thus, it shows that only the words "issues" and "bo" are responsible words (e.g., see bold highlighted rectangular areas or cells), these being associated with the coolest color in the spectrum.

In the second local heatmap 520, additional explainability-type details can be observed. For example, the words that have been designated as responsible for the selection as it relates to the term "help" in the original query include "help", "in", "getting", "bo", "issue", "resolved". In other words, each of these words was determined to have a contextual relationship with the word "help". The segment is highlighted (e.g., see rectangular bold area) because these set of words connect strongly to the responsible phrases or words that relates to the original query sentence by trying to understand what is the help the user is asking for, what context surrounds the issue, and how these bring the two sentences closer together. In one embodiment, token pairs corresponding to cells with high cosine similarity are to be treated as explanation words (while ignoring stopwords, punctuation, etc. and focusing on keywords). When there is a combination of top explanation words, there can be a more in-depth understanding of why the BERT-based model made the prediction.

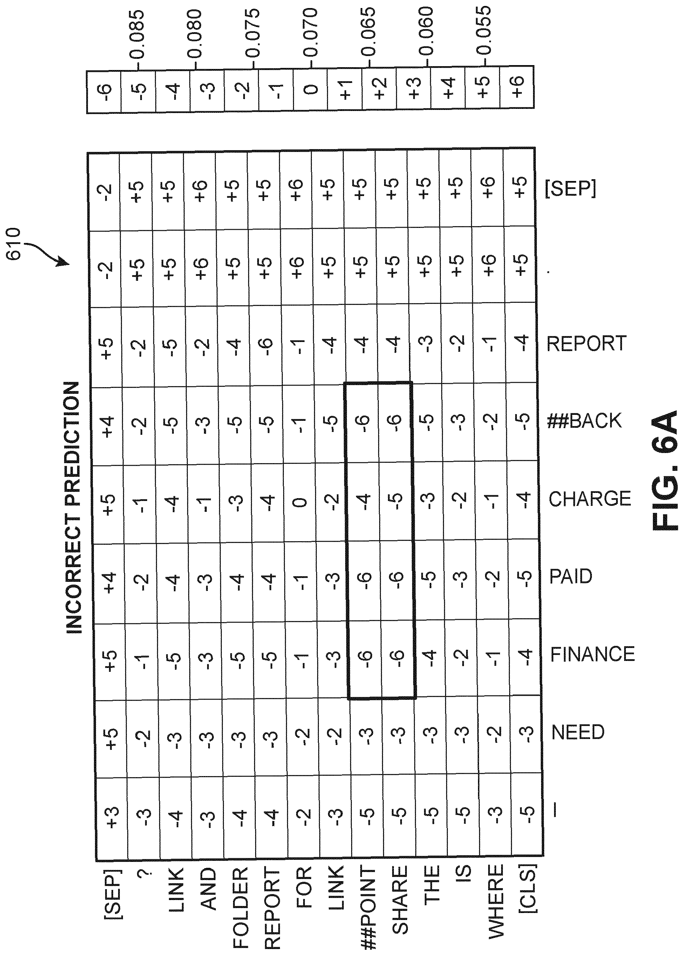

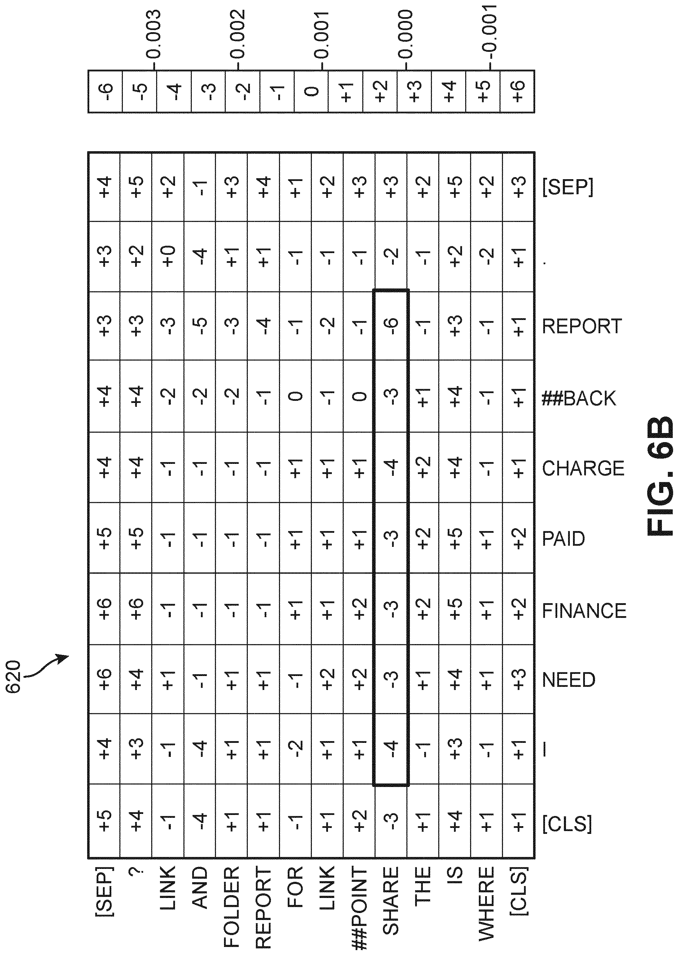

A further example of a heatmap visualization graph is shown in FIGS. 6A and 6B. In FIG. 6A, a third local heatmap 610 shows the BERT model's prediction of an intent for a different query, and in FIG. 6B a fourth local heatmap 620 shows the proposed embodiments' explainability of the intent that was predicted by the BERT model in FIG. 6A. In both of these heatmaps, a y-axis lists the terms of the user's query ("where", "is", "the", "share", "##point", "link", "for", "report", "folder", "and", "link") as the fixed sentences in the pair of sentences. An x-axis of each heatmap lists the terms of the similar sentence that was compared with the query and selected as the intent by the BERT model ("I", "need", "finance", "paid", "charge", "##back", "report"). In this example, the query was focused on accessing or managing the care reports location, and the BERT model incorrectly designated the intent as the user requesting chargeback reports. The third local heatmap 610, shown as a number scale converted-color map, was generated based on the regular BERT model prediction from attention weights assigned for each of the words. A large block shows the words "finance", "paid", "charge" "##back" are responsible words (e.g., see bold highlighted rectangular areas or cells), these being associated with the coolest color in the spectrum.

In the fourth local heatmap 620, additional explainability-type details can be observed that underscore the fact that the selected intention was incorrect. For example, the words that have been designated as responsible for the selection as it relates to the term "help" in the original query include a single strip of cool color cells extending across all of the terms as having a contextual relationship with the word "share" (higher similarity of the word embeddings). The segment is highlighted (e.g., see rectangular bold area) because these set of words connect strongly to the responsible phrases or words that relates to the original query sentence by trying to understand what is the help the user is asking for, what context surrounds the issue, and how these bring the two sentences closer together. The incorrect prediction can now be understood in this way, and allow the reviewer to make changes or adjustments to improve the performance of the BERT model. For example, where the query is incorrectly predicted, there is an absence of a clean set of explanation words. When the same embeddings are passed through the BERT Siamese model, the interpretation is not in sync with the regular BERT model's output, but it nevertheless provides insight into the explanation words that were used by the regular BERT model to justify the rationality of the (incorrect) prediction.

The use of heatmaps in visualizing the predicted intents and presenting a rationale for the prediction allows the user to observe correlations between two vector embeddings of the given tokens, listed on each axis. The system generates heatmaps to offer reviewers a representation that clarifies how the model determined whether two phrases are and/or two words are similar to a degree that other representations do not provide, ensuring a clear understanding of how the 'black-box' is working. The proposed explainability model can thereby help reviewers understand the rationale behind a prediction made of a particular intent by a machine by providing insight into which words specifically were responsible for the given prediction and how the model can be refined by ensuring proper usage of words and a more appropriate selection of sentences for training. This system can improve conversational AI models by incorporating awareness of context, such that free flowing text can be used as both input and output, and an explanation of the prediction can be generated in a simple and accurate format, while also reducing the system response time.

In some examples, the reviewers can add new sentences to the training corpus and/or make modifications to the tags assigned to current sentences in the training corpus in response to the explainability information generated. In other words, the output (e.g., the heatmap) that shows how the system determined intent can guide a reviewer in determining specifically which changes to make to improve performance of the prediction model. For example, depending on the corpus, the reviewer could adjust the choice of words or the sentences, and/or increase the corpus size with more appropriate or defined sentences and associated labels. In another example, an ambiguous intent can be corrected if the intent label for a sentence or phrase or even a word is corrected.

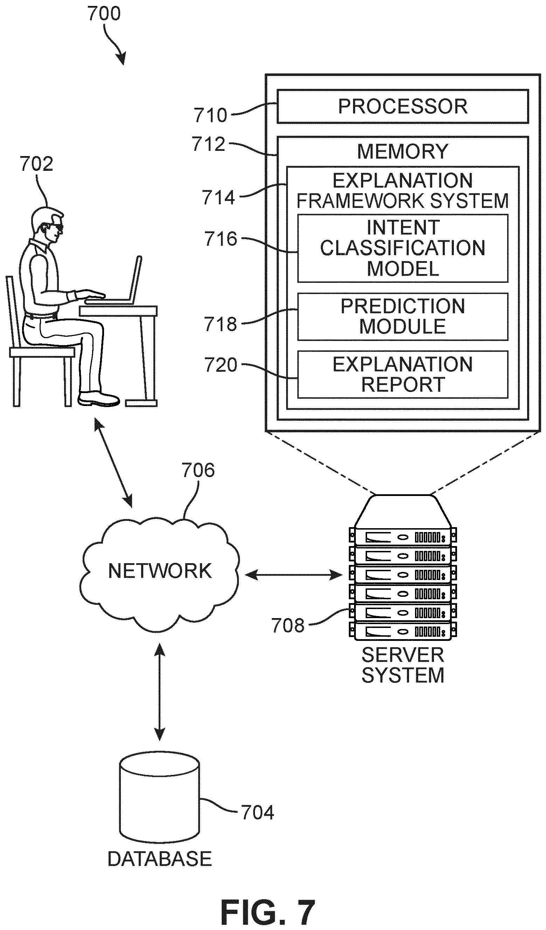

FIG. 7 is a schematic diagram of an environment 700 for an explanation framework system 714 ("explanation system" 714), according to an embodiment. The environment 800 may include a plurality of components capable of performing the disclosed methods. For example, environment 700 includes a user device 702, a computing/server system 708, and a database 704. The components of environment 700 can communicate with each other through a network 706. For example, user device 702 may retrieve information from database 704 via network 706. In some embodiments, network 706 may be a wide area network ("WAN"), e.g., the Internet. In other embodiments, network 706 may be a local area network ("LAN").

As shown in FIG. 7, components of the explanation system 714 may be hosted in computing system 708, which may have a memory 712 and a processor 710. Processor 710 may include a single device processor located on a single device, or it may include multiple device processors located on one or more physical devices. Memory 712 may include any type of storage, which may be physically located on one physical device, or on multiple physical devices. In some cases, computing system 708 may comprise one or more servers that are used to host the system.

While FIG. 7 shows one user device, it is understood that one or more user devices may be used. For example, in some embodiments, the system may include two or three user devices. In some embodiments, the user device may be a computing device used by a user. For example, user device 702 may include a smartphone or a tablet computer. In other examples, user device 702 may include a laptop computer, a desktop computer, and/or another type of computing device. The user devices may be used for inputting, processing, and displaying information. Referring to FIG. 7, environment 700 may further include database 704, which stores test data, training data, labels, sentences (corpus) and/or other related data for the components of the system as well as other external components. This data may be retrieved by other components for explanation system 714. As discussed above, explanation system 714 may include an intent classification model 716, a prediction module 718, and explanation reporting module 720. Each of these components may be used to perform the operations described herein.

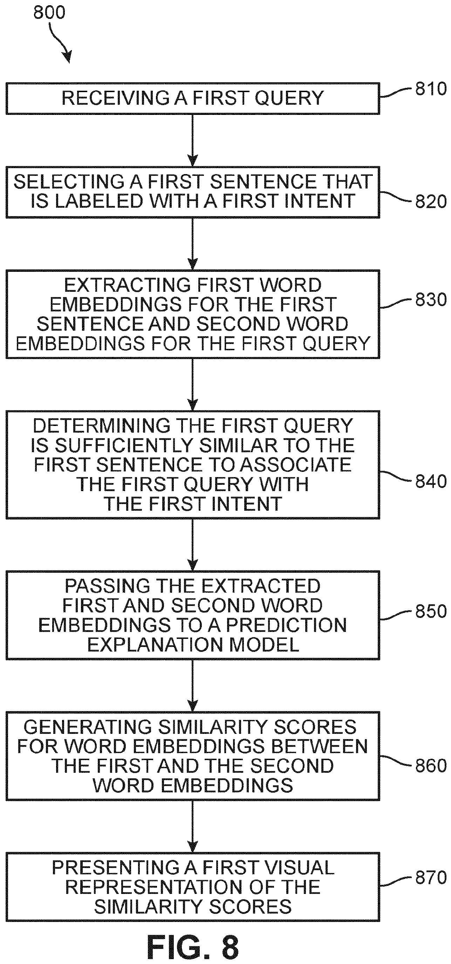

FIG. 8 is a flow chart illustrating an embodiment of a method 800 of providing reasoning for an intent prediction made by an artificial intelligence (Al)-based intent classifier. The method 800 includes a first step 810 of receiving, at an intent classifier, a first query, and a second step 820 of selecting, from a training corpus and by the intent classifier, a first sentence that is labeled with a first intent. A third step 830 includes extracting, at the intent classifier, first word embeddings for the first sentence and second word embeddings for the first query, and a fourth step 840 includes determining, at the intent classifier, the first query is sufficiently similar to the first sentence to associate the first query with the first intent. A fifth step 850 includes passing, from the intent classifier, the extracted first word embeddings and second word embeddings to a prediction explanation model, and a sixth step 860 includes generating, at the prediction explanation model, similarity scores for all possible pairings of word embeddings between the first word embeddings and the second word embeddings. The method 800 further includes a seventh step 870 of presenting, via the prediction explanation model, a first visual representation of the similarity scores.

In other embodiments, the method may include additional steps or aspects. In another example, the method 800 further includes a step of concatenating, at the prediction explanation model, a vector representation of the first query and the first sentence. In some embodiments, the similarity scores are based on similarity values calculated between each pairing of word embeddings with respect to one or more of their shared semantic, syntactic, and contextual morphologies. In one example, the first visual representation is a heatmap. In some embodiments, the first visual representation indicates a rationale for the selection of the first intent whether or not the intent classifier was correct. In another example, the first visual representation is a local-level matrix in which each of the word embeddings of the first word embeddings are shown on a first axis and each of the word embeddings of the second word embeddings are shown on a second axis, and the similarity score for each of the possible pairings are presented as individual cells in the matrix. In some embodiments, the method also includes steps of selecting, from the training corpus and by the intent classifier, a second sentence that is labeled with a second intent, extracting, at the intent classifier, third word embeddings for the second sentence, determining, at the intent classifier, the first query is also sufficiently similar to the second sentence to associate the first query with the second intent, passing, from the intent classifier, the extracted third word embeddings to the prediction explanation model, generating, at the prediction explanation model, second similarity scores for all possible pairings of word embeddings between the third word embeddings and the second word embeddings, and presenting, via the prediction explanation model, a second visual representation of the second similarity scores.

Embodiments may include a non-transitory computer-readable medium (CRM) storing software comprising instructions executable by one or more computers which, upon such execution, cause the one or more computers to perform the disclosed methods. Non-transitory CRM may refer to a CRM that stores data for short periods or in the presence of power such as a memory device or Random Access Memory (RAM). For example, a non-transitory computer-readable medium may include storage components, such as, a hard disk (e.g., a magnetic disk, an optical disk, a magnetooptic disk, and/or a solid state disk), a compact disc (CD), a digital versatile disc (DVD), a floppy disk, a cartridge, and/or a magnetic tape.

To provide further context, in some embodiments, some of the processes described herein can be understood to operate in a system architecture that can include a plurality of virtual local area network (VLAN) workstations at different locations that communicate with a main data center with dedicated virtual servers such as a web server for user interfaces, an app server for OCR and data processing, a database for data storage, etc. As a general matter, a virtual server is a type of virtual machine (VM) that is executed on a hardware component (e.g., server). In some examples, multiple VMs can be deployed on one or more servers.

In different embodiments, the system may be hosted at least in part in a cloud computing environment offering ready scalability and security. The cloud computing environment can include, for example, an environment that hosts the document processing management service. The cloud computing environment may provide computation, software, data access, storage, etc. services that do not require end-user knowledge of a physical location and configuration of system(s) and/or device(s) that hosts the policy management service. For example, a cloud computing environment may include a group of computing resources (referred to collectively as "computing resources" and individually as "computing resource"). It is contemplated that implementations of the present disclosure can be realized with appropriate cloud providers (e.g., AWS provided by Amazon^{™}, GCP provided by Google^{™}, Azure provided by Microsoft^{™}, etc.).

The methods, devices, and processing described above may be implemented in many different ways and in many different combinations of hardware and software. For example, all or parts of the implementations may be circuitry that includes an instruction processor, such as a Central Processing Unit (CPU), microcontroller, or a microprocessor; or as an Application Specific Integrated Circuit (ASIC), Programmable Logic Device (PLD), or Field Programmable Gate Array (FPGA); or as circuitry that includes discrete logic or other circuit components, including analog circuit components, digital circuit components or both; or any combination thereof.

While various embodiments of the invention have been described, the description is intended to be exemplary, rather than limiting, and it will be apparent to those of ordinary skill in the art that many more embodiments and implementations are possible that are within the scope of the invention. Accordingly, the invention is not to be restricted except in light of the attached claims and their equivalents. Also, various modifications and changes may be made within the scope of the attached claims.

The following numbered clauses describe further illustrative implementations only.
1. A method for providing reasoning for an intent prediction made by an artificial intelligence (Al)-based intent classifier, the method comprising:
   receiving, at an intent classifier, a first query;
   selecting, from a training corpus and by the intent classifier, a first sentence that is labeled with a first intent;
   extracting, at the intent classifier, first word embeddings for the first sentence and second word embeddings for the first query;
   determining, at the intent classifier, the first query is sufficiently similar to the first sentence to associate the first query with the first intent;
   passing, from the intent classifier, the extracted first word embeddings and second word embeddings to a prediction explanation model;
   generating, at the prediction explanation model, similarity scores for all possible pairings of word embeddings between the first word embeddings and the second word embeddings; and
   presenting, via the prediction explanation model, a first visual representation of the similarity scores.
2. The method of clause 1, further comprising concatenating, at the prediction explanation model, a vector representation of the first query and the first sentence.
3. The method of clause 1 or clause 2, wherein the similarity scores are based on similarity values calculated between each pairing of word embeddings with respect to one or more of their shared semantic, syntactic, and contextual morphologies.
4. The method of any previous clause, wherein the first visual representation is a heatmap.
5. The method of any previous clause, wherein the first visual representation indicates a rationale for the selection of the first intent whether or not the intent classifier was correct.
6. The method of any previous clause, wherein the first visual representation is a local-level matrix in which each of the word embeddings of the first word embeddings are shown on a first axis and each of the word embeddings of the second word embeddings are shown on a second axis, and the similarity score for each of the possible pairings are presented as individual cells in the matrix.
7. The method of any previous clause, further comprising:
   selecting, from the training corpus and by the intent classifier, a second sentence that is labeled with a second intent;
   extracting, at the intent classifier, third word embeddings for the second sentence;
   determining, at the intent classifier, the first query is also sufficiently similar to the second sentence to associate the first query with the second intent;
   passing, from the intent classifier, the extracted third word embeddings to the prediction explanation model;
   generating, at the prediction explanation model, second similarity scores for all possible pairings of word embeddings between the third word embeddings and the second word embeddings; and
   presenting, via the prediction explanation model, a second visual representation of the second similarity scores.
8. A non-transitory computer-readable medium storing software comprising instructions executable by one or more computers which, upon such execution, cause the one or more computers to:
   receive, at an intent classifier, a first query;
   select, from a training corpus and by the intent classifier, a first sentence that is labeled with a first intent;
   extract, at the intent classifier, first word embeddings for the first sentence and second word embeddings for the first query;
   determine, at the intent classifier, the first query is sufficiently similar to the first sentence to associate the first query with the first intent;
   pass, from the intent classifier, the extracted first word embeddings and second word embeddings to a prediction explanation model;
   generate, at the prediction explanation model, similarity scores for all possible pairings of word embeddings between the first word embeddings and the second word embeddings; and
   present, via the prediction explanation model, a first visual representation of the similarity scores.
9. The non-transitory computer-readable medium storing software of clause 8, wherein the instructions further cause the one or more computers to concatenate, at the prediction explanation model, a vector representation of the first query and the first sentence.
10. The non-transitory computer-readable medium storing software of clause 8 or clause 9, wherein the similarity scores are based on similarity values calculated between each pairing of word embeddings with respect to one or more of their shared semantic, syntactic, and contextual morphologies.
11. The non-transitory computer-readable medium storing software of any of clauses 8 to 10, wherein the first visual representation is a heatmap.
12. The non-transitory computer-readable medium storing software of any of clauses 8 to 11, wherein the first visual representation indicates a rationale for the selection of the first intent whether or not the intent classifier was correct.
13. The non-transitory computer-readable medium storing software of any of clauses 8 to 12, wherein the first visual representation is a local-level matrix in which each of the word embeddings of the first word embeddings are shown on a first axis and each of the word embeddings of the second word embeddings are shown on a second axis, and the similarity score for each of the possible pairings are presented as individual cells in the matrix.
14. The non-transitory computer-readable medium storing software of any of clauses 8 to 13, wherein the instructions further cause the one or more computers to:
   select, from the training corpus and by the intent classifier, a second sentence that is labeled with a second intent;
   extract, at the intent classifier, third word embeddings for the second sentence;
   determine, at the intent classifier, the first query is also sufficiently similar to the second sentence to associate the first query with the second intent;
   pass, from the intent classifier, the extracted third word embeddings to the prediction explanation model;
   generate, at the prediction explanation model, second similarity scores for all possible pairings of word embeddings between the third word embeddings and the second word embeddings; and
   present, via the prediction explanation model, a second visual representation of the second similarity scores.
15. A system for providing reasoning for an intent prediction made by an artificial intelligence (Al)-based intent classifier, the system comprising one or more computers and one or more storage devices storing instructions that are operable, when executed by the one or more computers, to cause the one or more computers to:
   receive, at an intent classifier, a first query;
   select, from a training corpus and by the intent classifier, a first sentence that is labeled with a first intent;
   extract, at the intent classifier, first word embeddings for the first sentence and second word embeddings for the first query;
   determine, at the intent classifier, the first query is sufficiently similar to the first sentence to associate the first query with the first intent;
   pass, from the intent classifier, the extracted first word embeddings and second word embeddings to a prediction explanation model;
   generate, at the prediction explanation model, similarity scores for all possible pairings of word embeddings between the first word embeddings and the second word embeddings; and
   present, via the prediction explanation model, a first visual representation of the similarity scores.
16. The system of clause 15, wherein the instructions further cause the one or more computers to concatenate, at the prediction explanation model, a vector representation of the first query and the first sentence.
17. The system of clause 15 or clause 16, wherein the similarity scores are based on similarity values calculated between each pairing of word embeddings with respect to one or more of their shared semantic, syntactic, and contextual morphologies.
18. The system of any of clauses 15 to 17, wherein the first visual representation is a heatmap.
19. The system of any of clauses 15 to 18, wherein the first visual representation is a local-level matrix in which each of the word embeddings of the first word embeddings are shown on a first axis and each of the word embeddings of the second word embeddings are shown on a second axis, and the similarity score for each of the possible pairings are presented as individual cells in the matrix.
20. The system of any of clauses 15 to 19, wherein the instructions further cause the one or more computers to:
   select, from the training corpus and by the intent classifier, a second sentence that is labeled with a second intent;
   extract, at the intent classifier, third word embeddings for the second sentence;
   determine, at the intent classifier, the first query is also sufficiently similar to the second sentence to associate the first query with the second intent;
   pass, from the intent classifier, the extracted third word embeddings to the prediction explanation model;
   generate, at the prediction explanation model, second similarity scores for all possible pairings of word embeddings between the third word embeddings and the second word embeddings; and
   present, via the prediction explanation model, a second visual representation of the second similarity scores.

## Claims

1. A method for providing reasoning for an intent prediction made by an artificial intelligence (Al)-based intent classifier, the method comprising:
receiving, at an intent classifier, a first query;
selecting, from a training corpus and by the intent classifier, a first sentence that is labeled with a first intent;
extracting, at the intent classifier, first word embeddings for the first sentence and second word embeddings for the first query;
determining, at the intent classifier, the first query is sufficiently similar to the first sentence to associate the first query with the first intent;
passing, from the intent classifier, the extracted first word embeddings and second word embeddings to a prediction explanation model;
generating, at the prediction explanation model, similarity scores for all possible pairings of word embeddings between the first word embeddings and the second word embeddings; and
presenting, via the prediction explanation model, a first visual representation of the similarity scores.

2. The method of claim 1, further comprising concatenating, at the prediction explanation model, a vector representation of the first query and the first sentence.

3. The method of claim 1 or claim 2, wherein the similarity scores are based on similarity values calculated between each pairing of word embeddings with respect to one or more of their shared semantic, syntactic, and contextual morphologies.

4. The method of any previous claim, wherein the first visual representation is a heatmap; and/or wherein the first visual representation indicates a rationale for the selection of the first intent whether or not the intent classifier was correct; and/or wherein the first visual representation is a local-level matrix in which each of the word embeddings of the first word embeddings are shown on a first axis and each of the word embeddings of the second word embeddings are shown on a second axis, and the similarity score for each of the possible pairings are presented as individual cells in the matrix.

5. The method of any previous claim, further comprising:
selecting, from the training corpus and by the intent classifier, a second sentence that is labeled with a second intent;
extracting, at the intent classifier, third word embeddings for the second sentence;
determining, at the intent classifier, the first query is also sufficiently similar to the second sentence to associate the first query with the second intent;
passing, from the intent classifier, the extracted third word embeddings to the prediction explanation model;
generating, at the prediction explanation model, second similarity scores for all possible pairings of word embeddings between the third word embeddings and the second word embeddings; and
presenting, via the prediction explanation model, a second visual representation of the second similarity scores.

6. A non-transitory computer-readable medium storing software comprising instructions executable by one or more computers which, upon such execution, cause the one or more computers to:
receive, at an intent classifier, a first query;
select, from a training corpus and by the intent classifier, a first sentence that is labeled with a first intent;
extract, at the intent classifier, first word embeddings for the first sentence and second word embeddings for the first query;
determine, at the intent classifier, the first query is sufficiently similar to the first sentence to associate the first query with the first intent;
pass, from the intent classifier, the extracted first word embeddings and second word embeddings to a prediction explanation model;
generate, at the prediction explanation model, similarity scores for all possible pairings of word embeddings between the first word embeddings and the second word embeddings; and
present, via the prediction explanation model, a first visual representation of the similarity scores.

7. The non-transitory computer-readable medium storing software of claim 6, wherein the instructions further cause the one or more computers to concatenate, at the prediction explanation model, a vector representation of the first query and the first sentence.

8. The non-transitory computer-readable medium storing software of claim 6 or claim 7, wherein the similarity scores are based on similarity values calculated between each pairing of word embeddings with respect to one or more of their shared semantic, syntactic, and contextual morphologies.

9. The non-transitory computer-readable medium storing software of any of claims 6 to 8, wherein the first visual representation is a heatmap; and/or
wherein the first visual representation indicates a rationale for the selection of the first intent whether or not the intent classifier was correct; and/or
wherein the first visual representation is a local-level matrix in which each of the word embeddings of the first word embeddings are shown on a first axis and each of the word embeddings of the second word embeddings are shown on a second axis, and the similarity score for each of the possible pairings are presented as individual cells in the matrix.

10. The non-transitory computer-readable medium storing software of any of claims6 to 9, wherein the instructions further cause the one or more computers to:
select, from the training corpus and by the intent classifier, a second sentence that is labeled with a second intent;
extract, at the intent classifier, third word embeddings for the second sentence;
determine, at the intent classifier, the first query is also sufficiently similar to the second sentence to associate the first query with the second intent;
pass, from the intent classifier, the extracted third word embeddings to the prediction explanation model;
generate, at the prediction explanation model, second similarity scores for all possible pairings of word embeddings between the third word embeddings and the second word embeddings; and
present, via the prediction explanation model, a second visual representation of the second similarity scores.

11. A system for providing reasoning for an intent prediction made by an artificial intelligence (Al)-based intent classifier, the system comprising one or more computers and one or more storage devices storing instructions that are operable, when executed by the one or more computers, to cause the one or more computers to:
receive, at an intent classifier, a first query;
select, from a training corpus and by the intent classifier, a first sentence that is labeled with a first intent;
extract, at the intent classifier, first word embeddings for the first sentence and second word embeddings for the first query;
determine, at the intent classifier, the first query is sufficiently similar to the first sentence to associate the first query with the first intent;
pass, from the intent classifier, the extracted first word embeddings and second word embeddings to a prediction explanation model;
generate, at the prediction explanation model, similarity scores for all possible pairings of word embeddings between the first word embeddings and the second word embeddings; and
present, via the prediction explanation model, a first visual representation of the similarity scores.

12. The system of claim 11, wherein the instructions further cause the one or more computers to concatenate, at the prediction explanation model, a vector representation of the first query and the first sentence.

13. The system of claim 11 or claim 12, wherein the similarity scores are based on similarity values calculated between each pairing of word embeddings with respect to one or more of their shared semantic, syntactic, and contextual morphologies.

14. The system of any of claims 11 to 13, wherein the first visual representation is a heatmap and/or is a local-level matrix in which each of the word embeddings of the first word embeddings are shown on a first axis and each of the word embeddings of the second word embeddings are shown on a second axis, and the similarity score for each of the possible pairings are presented as individual cells in the matrix.

15. The system of any of claims 11 to 14 , wherein the instructions further cause the one or more computers to:
select, from the training corpus and by the intent classifier, a second sentence that is labeled with a second intent;
extract, at the intent classifier, third word embeddings for the second sentence;
determine, at the intent classifier, the first query is also sufficiently similar to the second sentence to associate the first query with the second intent;
pass, from the intent classifier, the extracted third word embeddings to the prediction explanation model;
generate, at the prediction explanation model, second similarity scores for all possible pairings of word embeddings between the third word embeddings and the second word embeddings; and
present, via the prediction explanation model, a second visual representation of the second similarity scores.
